# EUROPÄISCHE PATENTSCHRIFT

(11) **EP 1 608 877 B1**
(45) Veröffentlichungstag und Bekanntmachung des Hinweises auf die Patenterteilung: **02.05.2007**
(21) Anmeldenummer: 04724548.5
(22) Anmeldetag: 31.03.2004
(51) Int. Cl.: F15B 13/04, F16K 37/00, G01D 11/24

(54) **Anordnung zum Erfassen und Übertragung von Messdaten aus einem hochgespannten Fluid gefüllten Druckraum**
Arrangement for the detection and transmission of test data from a pressure chamber filled with a high-pressure fluid
Dispositif permettant de détecter et de transmettre des données de mesure provenant d'une chambre sous pression remplie d'un fluide sous haute pression

(30) Priorität: 03.04.2003 DE 10315369
(43) Veröffentlichungstag der Anmeldung: 28.12.2005
(73) Patentinhaber: Parker Hannifin GmbH, 33659 Bielefeld (DE)
(72) Erfinder: SCHEFFEL, Gerd, 41352 Korschenbroich (DE)
(74) Vertreter: Müller, Karl-Ernst
(86) Internationale Anmeldenummer: PCT/EP2004/003373
(87) Internationale Veröffentlichungsnummer: WO 2004/088145

(56) Entgegenhaltungen:
- EP-A- 0 105 219
- EP-A- 0 439 037
- DE-A- 4 228 307
- DE-A- 19 510 447
- DE-A- 19 724 076
- DE-C- 19 841 258
- JP-U- 2 066 784
- US-A- 3 268 683
- US-A- 6 152 172

## Beschreibung

Die Erfindung betrifft eine Anordnung zum Erfassen und Übertragen von Meßdaten aus einem einen mit einem hochgespannten Fluid gefüllten und unter einem einheitlichen Druck stehenden Druckraum aufweisenden Gehäuse, wobei in dem Druckraum des Gehäuses Messaufnehmer angeordnet und an aus dem Gehäuse herausgeführte Leiterbahnen angeschlossen sind.

Beispielsweise auf dem Gebiet der Hydraulikventile ergibt sich häufig die Problemstellung, die Bewegung eines in dem mit einem hochgespannten Fluid gefüllten Gehäuseraum beweglichen Ventilkolbens mittels eines Wegmeßsystems zu erfassen. Im Rahmen von bekannten Anordnungen ist beispielsweise ein an dem Ventilkolben angebrachter Stößel aus dem Gehäuse herausgeführt und an ein außerhalb des Gehäuses angeordnetes Wegmeßsystem, beispielsweise in der Form eines LVDT-Systems angekoppelt. Hiermit ist der Nachteil verbunden, dass die Abdichtung des aus dem Druckraum des Gehäuses herausgeführten Stößels aufwendig ist und über die Lebensdauer des Ventils auch eine Schwachstelle darstellen kann. Als weiterer Nachteil ergibt sich, dass aufgrund der zusätzlichen Anordnung eines Wegmeßsystems außerhalb des Gehäuses die axiale Baulänge derartiger Hydraulikventile vergrößert ist.

Eine Anordnung zum Erfassen und Übertragen von Messdaten aus einem mit einem hochgespannten Fluid gefüllten und unter einem einheitlichen Druck stehenden Druckraum aufweisenden Gehäuse mit den gattungsgemäßen Merkmalen ist aus der DE 42 28 307 A1 bekannt. Bei einem Ausführungsbeispiel der bekannten Anordnung ist der Messaufnehmer als Blattfeder ausgebildet, auf die ein oder zwei Dehnmessstreifen aufgebracht sind. Das erste Ende der Blattfeder ist in einem gehäusefest angebrachten Halter befestigt, während ihr zweites Ende einseitig an dem in seinem Weg zu erfassenden Ventilkolben anliegt. Der die Blattfeder festlegende Halter ist rohrförmig ausgebildet und in einer Bohrung eines gesonderten, mit dem Gehäuse fest verbundenen Sockels eingesetzt und reicht in das Gehäuse hinein. Die von den Messstreifen abgehenden Leiterbahnen zur Übertragung der Messdaten sind durch den rohrförmigen Halter aus dem Gehäuse heraus in eine in dem Sockel ausgebildete und die Ansteuerelektronik aufnehmende Kammer geführt. Bei dieser bekannten Anordnung ist nachteilig, dass die Durchführung des Halters in beziehungsweise die Verbindung des Halters mit dem den Druckraum umschließenden Gehäuse ebenfalls in besonderer Weise abgedichtet sein muss. Außerdem verursacht die Anordnung des gesonderten gehäusefesten Sockels ebenfalls eine entsprechend große Bauform.

Der Erfindung liegt daher die Aufgabe zugrunde, eine Anordnung zum Erfassen und Übertragen von Meßdaten aus einem mit einem hochgespannten Fluid gefüllten Druckraum zur Verfügung zu stellen, die die Abdichtungsprobleme verringert und deren Einsatz zu kleineren Baugrößen der betreffenden Gegenstände führt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass in dem Druckraum des Gehäuses eine auf beiden Seiten dem im Druckraum herrschenden Druck unterliegende und mit wenigstens einem Teilbereich aus dem Gehäuse herausgeführte Platine als Träger der Leiterbahnen angeordnet ist und dass das den Druckraum umschließende Gehäuse in der Ebene der Platine geteilt ist und die Gehäusehälften stirnseitig die Platine zwischen sich einspannen derart, daß unter Druckeinwirkung in der Platine hervorgerufene radiale Kräfte von dem Gehäuse aufgenommen werden.

Der von der Erfindung beschrittene Weg, eine Platine in den Druckraum eines Gehäuses zu integrieren, ist ungewöhnlich, weil sich bei den im Druckraum herrschenden hohen Drücken das Platinenmaterial unter Druckbeanspruchung verformen kann, so dass sich die Platine unter Druckbeanspruchung radial erweitert bzw. verformt. Daher ist erfindungsgemäß die Einspannung der Platine zwischen den Gehäusehälften des geteilten Gehäuses derart ausgeführt, dass die auftretenden radialen Kräfte von der Einspannung durch die Gehäusehälften aufgenommen werden. Weiterhin ist die Platine mit einem Teilbereich aus dem Gehäuse herausgeführt, um die Möglichkeit des Anschlusses entsprechender Meß- oder Signalverarbeitungsgeräte zu schaffen. Die Erfindung eignet sich für aus einem Hartkunststoff bestehende Platinen; auch weitere Materialien zur Herstellung entsprechender Platinen sind möglich.

Beispielsweise aus der US 3 268 683 sind sogenannte Vakuumschalter bekannt, bei denen in einem von einem Gehäuse umschlossenen Druckraum eine mit einem Ansatz aus dem Gehäuse herausgeführte Membran als Träger von elektrischen Kontakten angeordnet ist. Die Membran ist elektrisch leitend eingerichtet und dient der Stromversorgung des auf ihr befindlichen elektrischen Schaltkontaktes. Im Gegensatz zur erfindungsgemäßen Anordnung herrschen allerdings zu beiden Seiten der Membran jeweils unterschiedliche Drücke, so daß sich in Abhängigkeit von der Höhe der unterschiedlichen Drücke die Membran in dem Druckraum hin- und herbewegt, um den gewünschten Schaltvorgang auszuführen. Daher tritt das Problem einer Verformung dieser Membran nicht auf.

In einer ersten Ausführungsform der Erfindung ist vorgesehen, dass die Gehäusehälften die Platine im Kraftschluss festlegen.

Eine weitere, zweckmäßige Ausführungsform der Erfindung sieht vor, dass die Gehäusehälften die Platine im Formschluss festlegen, wobei im Einzelnen hierzu der Vorschlag unterbreitet ist, dass die eine Gehäusehälfte die stirnseitig anliegende andere Gehäusehälfte mit einem axial überstehenden Flansch außen umgreift, wobei die Platine mit ihrem äußeren Randbereich gegen die Innenseite des Flansches anliegt. Mit einer derartigen Gestaltung wird eine Art labyrinthartige Halterung für die Platine geschaffen, die sich gegen die Innenseite des Flansches abstützt.

Gleichzeitig eröffnet diese Ausführung die Möglichkeit, Dichtungsprobleme weitgehend zu vermeiden.

Um die Herausführung eines Teilbereichs der Platine nach außerhalb des Gehäuses zu schaffen, sieht ein Ausführungsbeispiel der Erfindung vor, dass der Flansch einen sich über einen begrenzten Umfangsabschnitt erstreckenden Ausschnitt aufweist, der von einem radial von der Platine abstehenden Ansatz durchgriffen ist.

Es kann vorgesehen sein, dass zwischen den Stirnseiten der die Platine einspannenden Gehäusehälften und den Oberflächen der Platine Dichtungen angeordnet sind.

Erfindungsgemäß kann die Platine eine dem Druckausgleich zwischen zu beiden Seiten der Platine befindlichen Teilräumen des Druckraums dienende Ausnehmung aufweisen.

Diese Ausnehmung erlaubt es, insbesondere ein Wegmeßsystem an die Platine anzuschließen; hierzu ist vorgesehen, dass die Platine zur Aufnahme eines Wegmeßsystems eingerichtet und in der Ausnehmung eine Weggeberspule angeordnet und mit den an der Platine befindlichen Leiterbahnen verbunden ist, wobei die in dem im Druckraum befindlichen Fluid liegende Weggeberspule einen durch die Ausnehmung der Platine und die Weggeberspule axial beweglichen Weggeberkern umschließt.

Soweit eine derartige Weggeberspule eine auf einem Spulenträger gewickelte Drahtwicklung aufweist, ist der Einsatz einer derartigen Weggeberspule nur in einem nicht-leitenden Fluid möglich. Um diese Nutzungseinschränkung zu vermeiden, ist nach einem Ausführungsbeispiel der Erfindung vorgesehen, daß die auf dem Spulenträger befindliche Drahtwicklung der Weggeberspule mit einem geeigneten Material umspritzt ist. Hiermit ist in vorteilhafter Weise der Kontakt zwischen dem Fluid und den Drahtwicklungen vermieden, so daß auch leitende Fluide einsetzbar sind. Es kommt hinzu, daß auch bei einem nicht-leitenden Fluid die Drahtwicklung nicht beeinträchtigt werden kann. Im Rahmen dieser Ausführung kann auch vorgesehen sein, daß die Umspritzung der Drahtwicklung die Anschlüsse der Drahtwicklung an die in der Platine verlaufenden Leiterbahnen umfaßt, wobei in einer zweckmäßigen Weise das Material der Umspritzung mit dem Material der Platine übereinstimmen kann.

Gemäß der Erfindung ist auch möglich, die Platine dadurch als Drucksensor mit der Möglichkeit einer Erfassung des im Druckraum des Gehäuses herrschenden Druckes auszubilden, indem vorgesehen ist, dass auf der Platine wenigstens ein eine Längenänderung der Platine erfassender Sensor angeordnet ist, beispielsweise ein Dehnungsmeßstreifen. Alternativ kann vorgesehen sein, dass in der Platine ein die Änderung der Materialstärke der Platine aufnehmender Sensor angeordnet ist. In beiden Fällen ist die Formänderung der Platine unter Berücksichtigung einer vorherigen Eichung ein Maßstab für den im Druckraum des Gehäuses herrschenden Druck.

Die Erfindung schlägt weiterhin die Verwendung einer entsprechend ausgebildeten Anordnung zur Erfassung der Längsbewegungen eines in Hydraulikventilen beweglichen Ventilkolbens vor, so dass mit der erfindungsgemäßen Anordnung die Nachteile des Eingangs zur Hydraulikventilen beschriebenen Standes der Technik vermieden sind.

Soweit in der WO 02/41332 A1 eine andere Bauform von in der Hydraulik oder Drucklufttechnik eingesetzten Ventilen beschrieben ist, eignet sich die erfindungsgemäße Anordnung in besonderer Weise auch zur Feststellung der Bewegungen des bei dieser Ventilbauart beweglichen Spulenträgers.

In der Zeichnung sind Ausführungsbeispiele der Erfindung wiedergegeben, welche nachstehend beschrieben sind. Es zeigen:
- Fig. 1:: ein einen Druckraum umschließendes Gehäuse mit einer darin angeordneten Platine in einer geschnitten Teil-Seitenansicht,
- Fig. 2:: den Gegenstand der Figur 1 im Schnitt nach Linie II - II in Figur 1,
- Fig. 3:: den Gegenstand der Figur 1 mit einem integrierten Wegmeßsystem.
- Fig. 4:: den Gegenstand der Figur 3 mit einer umspritzten Weggeberspule.

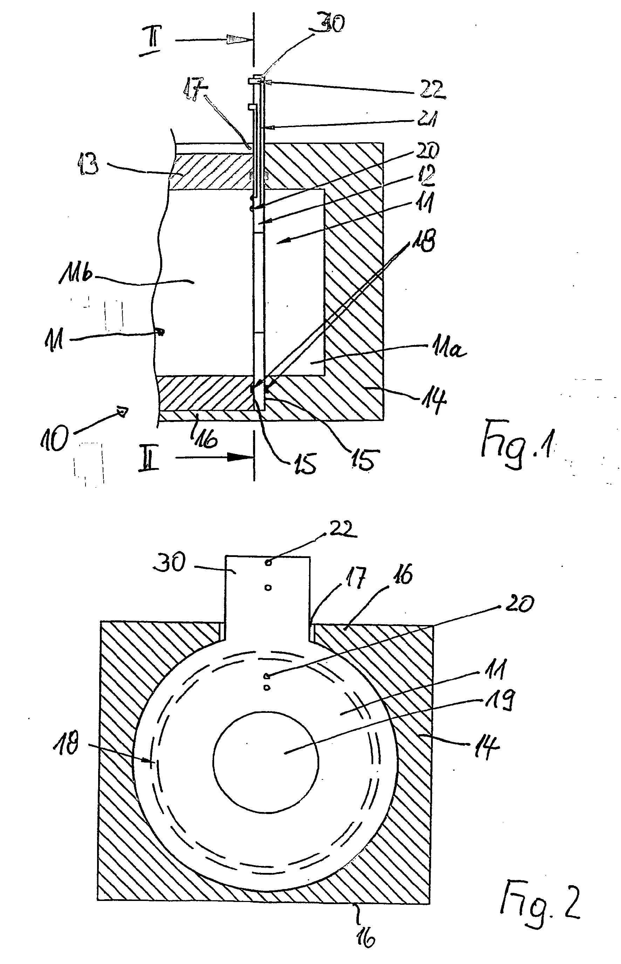

Das in Figur 1 mit einem Teilabschnitt dargestellte Gehäuse 10 umschließt einen Druckraum 11, in welchem eine Platine 12 angeordnet ist derart, dass beiderseits der Platine 12 Teilräume 11a, 11b des Druckraums 11 sich befinden. In der Ebene der Anordnung der Platine 12 ist das Gehäuse 10 geteilt ausgeführt mit einer Gehäusehälfte 13 und einer Gehäusehälfte 14, die mit ihren Stirnseiten 15 gegeneinander anliegen und dabei die Platine 12 zwischen sich einspannen. Die eine Gehäusehälfte 14 umgreift mit einem axial von ihr abstehenden Flansch 16 die Gehäusehälfte 13 auf deren Außenumfang.

Wie sich aus einer Zusammenschau der Figuren 1 und 2 ergibt, ist der Flansch 16 der Gehäusehälfte 14 mit einem Ausschnitt 17 ausgeführt, durch den ein an der Platine 12 befindlicher Ansatz 30 aus dem Gehäuse herausgeführt ist und den äußeren Umfang des Gehäuses überragt.

Zur Abdichtung der Platineneinspannung sind zwischen den Stirnseiten 15 der die Platine 12 einspannenden Gehäusehälften 13 und 14 und den zugeordneten Oberflächen der Platine 12 jeweils Dichtungen 18 in Form von O-Ringen angeordnet, die in die Stirnseiten 15 der Gehäusehälften 13 bzw. 14 eingelassen sind.

Im Hinblick auf die Übertragung von Meßdaten aus dem Druckraum 11 des Gehäuses 10 heraus sind in dem im Druckraum 11 liegenden Bereich der Platine 12 innen Kontakte 20 angeordnet, an die Leiterbahnen 21 anschließen, die in dem von den Gehäusehälften 13, 14 eingespannten Teilbereich der Platine 12 in dem Platinenkörper angeordnet sind und bis in den nach außerhalb des Gehäuses 10 reichenden Ansatz 30 verlaufen, wobei an dem Ansatz 30 an die Leiterbahnen 21 angeschlossene äußere Anschlusskontakte 22 vorgesehen sind.

Somit ermöglichen es die Kontakte 20 generell, an der Platine 12 geeignete Meßaufnehmer beispielsweise in Form eines Dehnungsmeßstreifens oder eines eine Änderung der Materialstärke der Platine 12 erfassenden Sensors anzubringen und die Ausgänge der entsprechenden Sensoren an die Kontakte 20 anzuschließen, um so die Meßsignale über die Leiterbahnen 21 an die außerhalb des Gehäuses 10 liegenden Anschlußkontakte 22 zu übertragen.

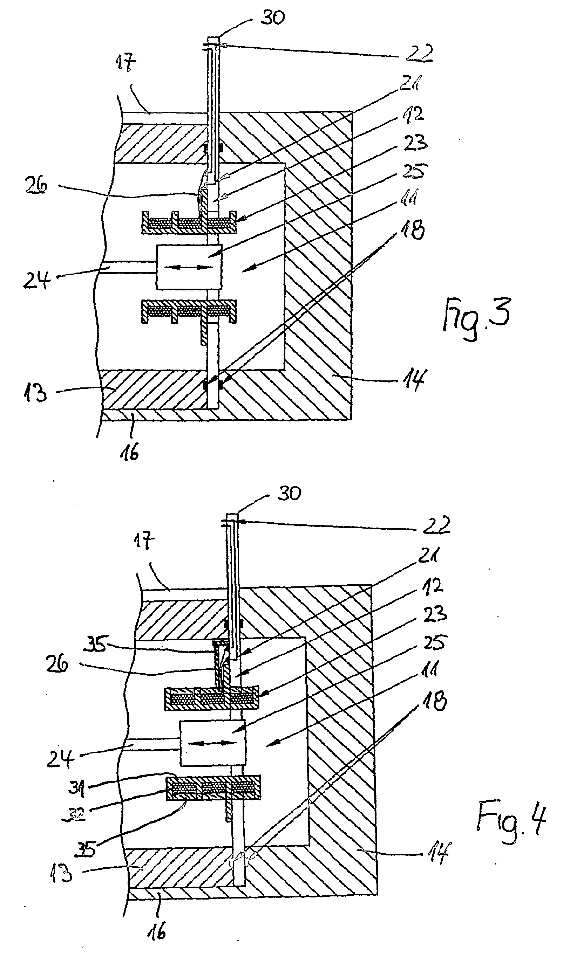

Bei dem dargestellten Ausführungsbeispiel ist im Hinblick auf die Anordnung eines Meßaufnehmers in der Platine 12 eine zentrale Ausnehmung 19 angeordnet, die einerseits einen Druckausgleich zwischen den Teilräumen 11a und 11b des Druckraums 11 schafft und andererseits, wie zu Figur 3 beschrieben wird, die Möglichkeit der Integration eines Wegmeßsystems bietet.

Wie sich aus Figur 3 ergibt ist zur Einrichtung eines Wegmeßsystems in der Ausnehmung 19 der Platine 12 eine Weggeberspule 23 angeordnet, die über Verbindungsleitungen 26 mit den inneren Kontakten 20 der Platine 12 verbunden ist. In der Weggeberspule 23 und damit auch in der Ausnehmung 19 der Platine 12 ist ein Weggeberkern 25 axial beweglich, der am Ende eines Stößels 24 befestigt ist, welcher Stößel 24 seinerseits beispielsweise bei Einsatz der erfindungsgemäßen Anordnung Teil eines in einem Hydraulikventil beweglichen Ventilkolbens sein kann. Somit sind die Längsbewegungen des Stößels 24 mittels des Wegmeßsystems 25, 23 zu erfassen, wobei die entsprechenden Signale über die elektrischen Verbindungen 22, 21, 20 nach außerhalb des Gehäuses zu übertragen sind.

Wie sich aus Figur 4 ergibt, kann in zweckmäßiger Weise die auf dem Spulenträger 31 der Weggeberspule 23 befindliche Drahtwicklung 32 mit einer Umspritzung 35 versehen sein, die die Drahtwicklung 32 einschließlich der Anschlüsse der Drahtwicklung an die in der Platine 12 verlaufenden Leiterbahnen 21 vollständig umschließt. Mit dieser Umspritzung 35, die aus dem gleichen Material wie die Platine 12 bestehen kann, so daß eine einheitliche Herstellung der Weggeberspule 23 einschließlich der Platine 12 ermöglicht ist, ist die Drahtwicklung 32 vollständig gegen die Einwirkung des in dem Druckraum 11 anstehenden und die Weggeberspule 23 vollständig umschließenden Fluids abgeschirmt.

Wie nicht weiter dargestellt, kann die Platine 12 auch an einer stirnseitigen Begrenzungswand des Druckraumes 11 anliegen, wobei das Gehäuse dann lediglich im Bereich dieser stirnseitigen Gehäusewand geteilt auszubilden ist. Der dem druckraumseitig auf die Platine 12 einwirkenden Druck entgegengesetzte Gegendruck wird durch die als Gegenlager wirkende Gehäusewand ausgeübt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Anordnung zum Erfassen und Übertragen von Meßdaten aus einem einen mit einem hochgespannten Fluid gefüllten und unter einem einheitlichen Druck stehenden Druckraum (11) aufweisenden Gehäuse (10), wobei in dem Druckraum (11) des Gehäuses (10) Messaufnehmer (23) angeordnet und an aus dem Gehäuse (10) herausgeführte Leiterbahnen (21) angeschlossen sind, **dadurch gekennzeichnet, dass** in dem Druckraum (11) des Gehäuses (10) eine auf beiden Seiten dem im Druckraum (11) herrschenden Druck unterliegende und mit wenigstens einem Teilbereich (30) aus dem Gehäuse (10) herausgeführte Platine (12) als Träger der Leiterbahnen (21) angeordnet ist und dass das den Druckraum (11) umschließende Gehäuse (10) in der Ebene der Platine (12) geteilt ist und die Gehäusehälften (13, 14) stirnseitig die Platine (12) zwischen sich einspannen derart, daß unter Druckeinwirkung in der Platine (12) hervorgerufene radiale Kräfte von dem Gehäuse (10) aufgenommen werden.

2. Anordnung nach Anspruch 1, **dadurch gekennzeichnet, daß** die Gehäusehälften (13, 14) die Platine (12) im Kraftschluß festlegen.

3. Anordnung nach Anspruch 1, **dadurch gekennzeichnet, daß** die Gehäusehälften (13, 14) die Platine (12) im Formschluß festlegen.

4. Anordnung nach einem der Ansprüche 1 bis 3, **dadurch gekennzeichnet, daß** die Platine (12) aus einem Hartkunststoff besteht.

5. Anordnung nach einem der Ansprüche 1 bis 4, **dadurch gekennzeichnet, daß** die eine Gehäusehälfte (14) die stirnseitig gegenüberliegende andere Gehäusehälfte (13) mit einem axial vorstehenden Flansch (16) außen umgreift, wobei die Platine (12) mit ihrem äußeren Randbereich gegen die Innenseite des Flansches (16) anliegt.

6. Anordnung nach Anspruch 5, **dadurch gekennzeichnet, daß** der Flansch (16) einen sich über einen begrenzten Umfangsabschnitt erstreckenden Ausschnitt (17) aufweist, der von einem radial von der Platine (12) abstehenden Ansatz (30) durchgriffen ist.

7. Anordnung nach einem der Ansprüche 1 bis 6, **dadurch gekennzeichnet, daß** zwischen den Stirnseiten (15) der die Platine (12) einspannenden Gehäusehälften (13, 14) und den Oberflächen der Platine (12) Dichtungen (18) angeordnet sind.

8. Anordnung nach einem der Ansprüche 1 bis 7, **dadurch gekennzeichnet, daß** die Platine (12) eine dem Druckausgleich zwischen zu beiden Seiten der Platine befindlichen Teilräumen (11a, 11b) des Druckraums (11) dienende Ausnehmung (19) aufweist.

9. Anordnung nach Anspruch 8, **dadurch gekennzeichnet, daß** die Platine (12) zur Aufnahme eines Wegmeßsystems eingerichtet und in der Ausnehmung (19) eine Weggeberspule (23) angeordnet und mit den an der Platine (12) befindlichen Leiterbahnen (21) verbunden ist, wobei die in dem Druckraum (11) befindlichen Fluid liegende Weggeberspule (23) einen durch die Ausnehmung (19) der Platine (12) und die Weggeberspule (23) axial beweglichen Weggeberkern (25) umschließt.

10. Anordnung nach Anspruch 9, **dadurch gekennzeichnet, daß** die auf dem Spulenträger (31) befindliche Drahtwicklung (32) der Weggeberspule (23) mit einem geeigneten Material umspritzt ist.

11. Anordnung nach Anspruch 10, **dadurch gekennzeichnet, daß** die Umspritzung (35) der Drahtwicklung (32) die Anschlüsse der Drahtwicklung (32) an die in der Platine (12) verlaufenden Leiterbahnen (21) umfaßt.

12. Anordnung nach Anspruch 10 oder 11, **dadurch gekennzeichnet, daß** das Material der Umspritzung (35) mit dem Material der Platine (12) übereinstimmt.

13. Anordnung nach einem der Ansprüche 1 bis 12, **dadurch gekennzeichnet, daß** auf der Platine (12) wenigstens eine Längenänderung der Platine (12) erfassender Sensor angeordnet ist.

14. Anordnung nach Anspruch 13, **dadurch gekennzeichnet, daß** der Sensor ein Dehnungsmeßstreifen ist.

15. Anordnung nach Anspruch 13, **dadurch gekennzeichnet, daß** in der Platine (12) ein die Änderung der Materialstärke der Platine (12) aufnehmender Sensor angeordnet ist.

16. Verwendung einer nach einem der Ansprüche 1 bis 15 ausgebildeten Anordnung zur Erfassung der Längsbewegungen eines in Hydraulikventilen beweglichen Ventilkolbens.

17. Verwendung einer nach einem der Ansprüche 1 bis 15 ausgebildeten Anordnung bei einem zur Betätigung eines in der Hydraulik oder Drucklufttechnik eingesetzten Ventils dienenden Aktuator mit einem in einem magnetisch leitenden Gehäuse durch Luftspaltinduktion auf einem eine Abfolge von Permanentmagnet und Polscheibe aufweisenden Magnetzylinder beweglichen Spulenträger.

## Claims

1. A system for detecting and transmitting test data from a housing (10) comprising a pressure chamber (11) that is filled with a high-pressure fluid and is homogeneously pressurized whereby within the pressure chamber (11) of the housing (10) sensing elements (23) are situated and connected to printed conductors (21) guided out of the housing (10), **characterised in that** a circuit board (12), both faces of which being subjected to the pressure prevailing in the pressure chamber and at least one portion (30) of which extending out of the housing (10), is situated inside the pressure chamber (11) as a support for the strip conductors (21) and that the housing (10) that encloses the pressure chamber (11) is separated in the plane of the circuit board (12) and the faces of the housing halves (13, 14) are clamping the circuit board (12) between them in such a way that radial forces exerted within the circuit board (12) are absorbed by the housing (10) when pressure is applied.

2. The system according to Claim 1, **characterized in that** the housing halves (13, 14) hold the circuit board (12) by a frictional connection.

3. The system according to Claim 1, **characterized in that** the housing halves (13, 14) hold the circuit board (12) by a positive connection.

4. The system according to one of Claims 1 to 3, **characterized in that** the circuit board (12) is made from a hard plastic.

5. The system according to one of Claims 1 to 4, **characterized in that** the one housing half (14) encompasses the opposite facing other housing half (13) externally via an axially projecting flange (16), the external edge area of the circuit board (12) being in contact with the inside of the flange (16).

6. The system according to Claim 5, **characterized in that** the flange (16) has a cutout (17) extending across a limited circumferential portion, which is penetrated by a projection (30) extending radial outwardly from the circuit board (12).

7. The system according to one of Claims 1 to 6, **characterized in that** seals (18) are situated between the faces (15) of the housing halves (13, 14) which clamp the circuit board (12) and the surfaces of the circuit board (12).

8. The system according to one of Claims 1 to 7, **characterized in that** the circuit board (12) has a recess (19) used to equalize pressure between subchambers (11a, 11b) of the pressure chamber (11) located on both sides of the circuit board.

9. The system according to one of Claims 1 to 8, **characterized in that** the circuit board (12) is designed to accommodate a position measuring system and a position pickup coil (23) is situated in the recess (19) and connected to the printed conductors (21) located on the circuit board (12), whereby the position pickup coil (23) lying in the fluid located in the pressure chamber (11) is surrounding a position pickup core (25) which is axially movable through the recess (19) of the circuit board (12) and the position pickup coil (23).

10. The system according to Claim 9, **characterized in that** the wire winding (32) of the position pickup coil (23) which is located on the coil frame (31) is spray coated with a suitable material.

11. The system according to Claim 10, **characterized in that** the spray coating (35) of the wire winding (32) includes the connections of the wire winding (32) to the printed conductors (21) extending in the circuit board (12).

12. The system according to Claim 10 or 11, **characterized in that** the material of the spray coating (35) matches the material of the circuit board (12).

13. The system according to one of Claims 1 to 12, **characterized in that** at least one sensor that detects a change of length of the circuit board (12) is situated on the circuit board (12).

14. The system according to Claim 13, **characterized in that** the sensor is a strain gauge.

15. The system according to Claim 13, **characterized in that** a sensor recording a change of the material thickness of the circuit board (12) is situated in the circuit board (12).

16. The use of a system designed according to one of Claims 1 to 15 for detecting the longitudinal movements of a valve piston movable in hydraulic valves.

17. The use of a system designed according to one of Claims 1 to 15 in an actuator for activating a valve used in hydraulics or compressed air technology having a coil frame movable through magnetic loading in a magnetic cylinder having a sequence of permanent magnets and pole discs in a magnetically conductive housing.

## Revendications

1. Dispositif d'enregistrement et de transmission de données de mesure provenant d'un boîtier comportant une chambre sous pression (11), qui contient un fluide sous haute tension et dans laquelle est appliquée une pression uniforme, des enregistreurs de mesure (23) étant disposés dans la chambre sous pression (11) du boîtier (10) et étant raccordés à des pistes conductives (21) qui sont guidées hors du boîtier (10), **caractérisé en ce que** dans la chambre sous pression (11) du boîtier (10) est agencée une platine (12) sous forme de support des pistes conductives (21), dont les deux faces sont exposées à la pression régnant dans la chambre sous pression (11) et dont au moins une zone partielle (30) est guidée hors du boîtier (10), et **en ce que** le boîtier (10) entourant la chambre sous pression (11) est séparé dans le plan de la platine (12) et les moitiés de boîtier (13, 14) enserrent la platine (12) entre elles du côté frontal, de telle sorte que les forces radiales dans la platine (12) générées sous l'effet de la pression exercée sont absorbées par le boîtier (10).

2. Dispositif selon la revendication 1, **caractérisé en ce que** les moitiés de boîtier (13, 14) bloquent la platine (12) par conjugaison de force.

3. Dispositif selon la revendication 1, **caractérisé en ce que** les moitiés de boîtier (13, 14) bloquent la platine (12) par conjugaison de forme.

4. Dispositif selon l'une quelconque des revendications 1 à 3, **caractérisé en ce que** la platine (12) est réalisée en matière plastique dure.

5. Dispositif selon l'une quelconque des revendications 1 à 4, **caractérisé en ce que** l'une des moitiés de boîtier (14) enserre à l'extérieur l'autre moitié de boîtier (13), située du côté frontal en face, au moyen d'un collet (16) en saillie dans le sens axial, la platine (12) étant en appui avec son bord extérieur contre la face intérieure du collet (16).

6. Dispositif selon la revendication 5, **caractérisé en ce que** le collet (16) comporte une découpe (17), qui s'étend sur une partie délimitée du pourtour et qui est traversée par une saillie (30) radiale sur la platine (12).

7. Dispositif selon l'une quelconque des revendications 1 à 6, **caractérisé en ce que** des garnitures d'étanchéité (18) sont posées entre les faces frontales (15) des moitiés de boîtier (13, 14) enserrant la platine (12) et les surfaces de la platine (12).

8. Dispositif selon l'une quelconque des revendications 1 à 7, **caractérisé en ce que** la platine (12) comporte un évidement (19) destiné à équilibrer la pression entre des chambres partielles (11a, 11b) de la chambre sous pression (11), situées de part et d'autre de la platine (12).

9. Dispositif selon la revendication 8, **caractérisé en ce que** la platine (12) est conçue pour recevoir un transducteur de position, et une bobine de détection de position (23) est agencée dans l'évidement (19) et est reliée aux pistes conductives (21) situées sur la platine (12), sachant que la bobine de détection de position (23), située dans le fluide contenu dans la chambre sous pression (11), entoure un tore de détection de position (25) mobile dans le sens axial à travers l'évidement (19) de la platine (12) et la bobine de détection de position (23).

10. Dispositif selon la revendication 9, **caractérisé en ce que** l'enroulement de fils (32) situé sur le support (31) de la bobine de détection de position (23) est enrobé par un matériau approprié moulé par injection.

11. Dispositif selon la revendication 10, **caractérisé en ce que** l'enrobage (35) de l'enroulement de fils (32) comporte les raccords de l'enroulement de fils (32) avec les pistes conductives (21) s'étendant dans la platine (12).

12. Dispositif selon la revendication 10 ou 11, **caractérisé en ce que** le matériau de l'enrobage (35) concorde avec le matériau de la platine (12).

13. Dispositif selon l'une quelconque des revendications 1 à 12, **caractérisé en ce qu'**au moins un capteur détectant la variation de longueur de la platine (12) est disposé sur la platine (12).

14. Dispositif selon la revendication 13, **caractérisé en ce que** le capteur est une jauge de contrainte.

15. Dispositif selon la revendication 13, **caractérisé en ce qu'**un capteur détectant la variation de l'épaisseur de matière de la platine (12) est disposé dans la platine (12).

16. Utilisation d'un dispositif réalisé selon l'une quelconque des revendications 1 à 15 pour détecter les mouvements longitudinaux d'un piston mobile dans des soupapes hydrauliques.

17. Utilisation d'un dispositif réalisé selon l'une quelconque des revendications 1 à 15 avec un actionneur destiné à actionner une soupape utilisée dans la technique hydraulique ou la technique d'air comprimé, comportant un support de bobine mobile par induction magnétique dans l'entrefer dans le boîtier conducteur magnétique, sur un cylindre magnétique comportant une succession d'aimants permanents et de disques polaires.
